# EUROPEAN PATENT APPLICATION

(11) **EP 3 422 153 A1**
(43) Date of publication of application: **02.01.2019**
(21) Application number: 18178660.9
(22) Date of filing: 19.06.2018
(51) Int. Cl.: G06F 3/01, G06F 3/16, G06T 19/00, G02B 27/01

(54) **SYSTEM AND METHOD FOR SELECTIVE SCANNING ON A BINOCULAR AUGMENTED REALITY DEVICE**

(30) Priority: 26.06.2017 US 201715632647
(71) Applicant: Hand Held Products, Inc., Fort Mill, SC 29707 (US)
(72) Inventor: TODESCHINI, Erik, Morris Plains, New Jersey 07950 (US)
(74) Representative: Houghton, Mark Phillip

(57) **Abstract**

Augmented reality headsets have the ability to render in three dimensional graphics in the operator's field of view so that it appears the objects are actually in the room with them. By tracking an operator's head movement and/or eyes, these headsets can determine where the operator's gaze lies and can add a corresponding cursor to the operator's view. As decodable indicia such as barcodes in the operator's view through the headset are highlighted the operator selects (e.g., using an air click gesture to simulate a mouse click) which indicia the operator is interested in scanning. The indicia is decoded and the data is returned to the headsets business logic.

## Description

### FIELD OF THE INVENTION

The present invention relates to personal visualization devices having three-dimensional and/or highlighting capability to detect and select indicia.

### BACKGROUND

Generally speaking eye gazing technology has been used in several different fields such as industrial controls, aviation, and emergency room situations where both hands are needed for tasks other than operation of a computer. Typically, these systems use a camera positioned on a wearable headgear frame to measure eye movement/position. Through such monitoring of eye movement, the camera may assist in determining the point of gaze of the eye of the wearer for these applications.

### SUMMARY

Accordingly, in one aspect, the present disclosure embraces a portable computer for imaging indicia comprising: a processor coupled to at least one camera to capture at least one indicia within the operator's field of view; and a display having a cursor corresponding to the eye gaze location of the operator; wherein the processor is further configured to: determine when the cursor is hovering over at least one indicia; and select the indicia and perform a decoding operation.

In an exemplary embodiment, aspects include a method of selective indicia scanning on a binocular augmented reality headset comprising: monitoring an operator's gaze to determine location of gaze is directed; performing a scan of the operator's field of view to determine if at least one indicia is present; positioning a cursor over the indicia on a display; select the at least one indicia; and decoding the least one indicia to determine the information contained within.

The foregoing illustrative summary, as well as other advantages of the invention, and the manner in which the same are accomplished, are further explained within the following detailed description and its accompanying drawings.

### BRIEF DESCRIPTION OF THE DRAWINGS

Figure 1 illustrates an exemplary binocular augmented reality device.
Figure 2 shows various devices communicating with the binocular augmented reality device via various wired or wireless technologies.
Figure 3 shows an operator gazing a plurality of indicia such as barcodes.
Figure 4 illustrates a flowchart demonstrating the eye gaze controlled indicia scanning process.

### DETAILED DESCRIPTION

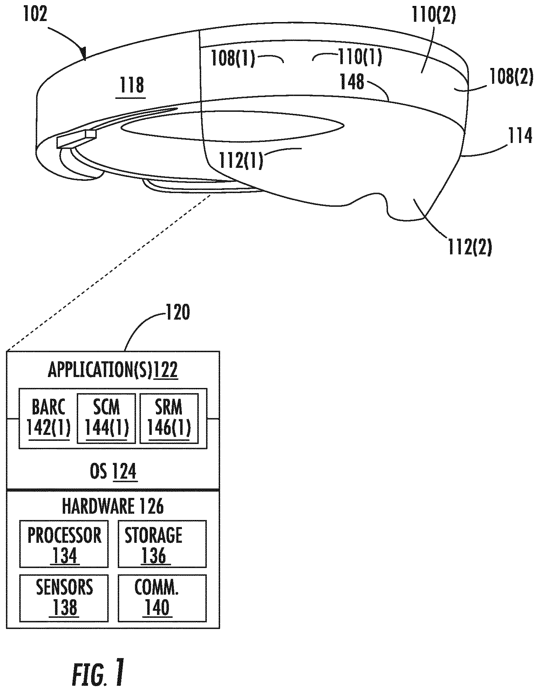

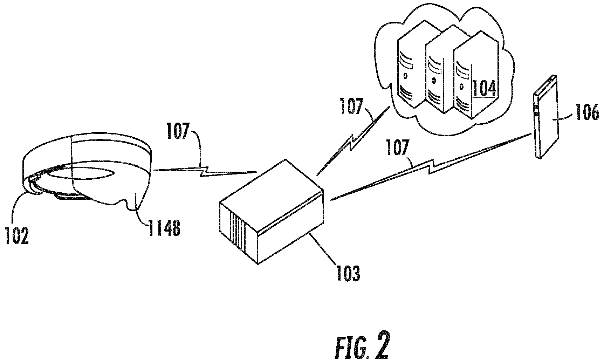

FIG. 1 illustrates an exemplary binocular augmented reality device 102. In this case, device 102 can be a wearable device such as a Microsoft® Hololens®. Such a device 102 is disclosed in U.S. Patent Serial No. 9,443,414 filed on August 7, 2012 and U.S. Patent Application Serial No. 20160371884, filed on June 17, 2015; both of which are hereby incorporated by reference. More particularly, in the illustrated embodiment of FIG. 1, device 102 is manifested as a head mounted display (HMD) device. In other implementations, the device 102 could be made to resemble more conventional vision-correcting eyeglasses, sunglasses, or any of a wide variety of other types of wearable devices. Device 102 can communicate with a server(s) 104 and/or a mobile device 106 as shown in Figure 2. In some cases, the server(s) 104 and/or a mobile device 106 can communicate with device 102 directly via wired or wireless technologies (e.g., Bluetooth, Wi-Fi, cellular communication, etc.) or indirectly through a networked hub device 103 illustrated by lightning bolts 107. After the device 102 captures information such as visible indicia through camera mounted on the device 102 this information may be transferred to the server(s) 104 and/or mobile device 106. As shown in FIG. 1, device 102 can include a plurality of outward-facing cameras 108(1) and 108(2) for scanning the operator environment; a plurality of inwardfacing cameras 110(1) and 110(2) to track the depth sensor's view of the environment and/or gaze of the operator; lenses (or display) 112 (corrective or non-corrective, clear or tinted); shield 114; and/or headband 118. In addition, device 102 can include an internal projector 148 which will be discussed in detail below.

An exemplary logic configuration 120 is illustrated which is located in device 102. Briefly, configuration 120 represents an operating system centric configuration. Configuration 120 is organized into one or more applications 122, operating system 124, and hardware 126. Device 102 can include a processor (or a plurality of processors) 134, storage 136, sensors 138, and a communication component 140 all working with the applications 122. The applications 122 may include a binocular augmented reality component (BARC) 142(1). In some implementations, the BARC 142(1) can properly map the operator's surroundings by including applications 122 such as a scene calibrating module (SCM) 144(1), a scene rendering module (SRM) 146(1), and/or other modules. It is to be understood that applications 122 (including applications 142(1), 144(1) and 146(1)) will all work with processor 134 in implementing the methods described herein and these elements will be used interchangeably in the description. These elements can be positioned in, on or in some other way associated with device 102. For instance, the elements can be positioned within headband 118. Sensors 138 can include the outwardly-facing camera(s) 108 and the inwardly-facing camera(s) 110. The sensors 138 can also include inertial measurement units (IMUs) (e.g., gyrometers, gyroscopes, accelerometers, and/or compasses), proximity sensors, and/or the like to track the location, head movement and/or head angle (or posture) of the wearer. Further, the inwardly facing cameras 110 can be configured to track eye movements of the operator to determine where the gaze of the operator is directed. In another example, the headband can include a battery (not shown) as a power source.

Examples of the design, arrangement, numbers, and/or types of components included on device 102 shown in FIG. 1 and discussed above are not meant to be limiting. From one perspective, device 102 can be a computer. The term "device," "computer," or "computing device" as used herein can mean any type of device that has some amount of processing capability and/or storage capability. Processing capability can be provided by one or more processors 134 that can execute data or applications in the form of computer-readable instructions to provide functionality. Data or applications 122 as disclosed herein, such as computer-readable instructions and/or user-related data, can be stored in storage 136. The storage 136 may be any "computer-readable storage media" and can include any one or more of volatile or non-volatile memory, hard drives, flash storage devices, and/or optical storage devices (e.g., CDs, DVDs, etc.), remote storage (e.g., cloud-based storage), and the like. As used herein, the term "computer-readable storage media" include non-transitory signals.

Configuration 120 can have a system on a chip (SOC) type design. In such a case, functionality provided by the device 102 can be integrated on a single SOC or multiple coupled SOCs. The term "processor" as used herein can also refer to central processing units (CPUs), graphical processing units (CPUs), controllers, microcontrollers, processor cores, or other types of processing devices. Generally, any of the functions described herein can be implemented using software, firmware, hardware (e.g., fixed-logic circuitry), or a combination of these implementations.

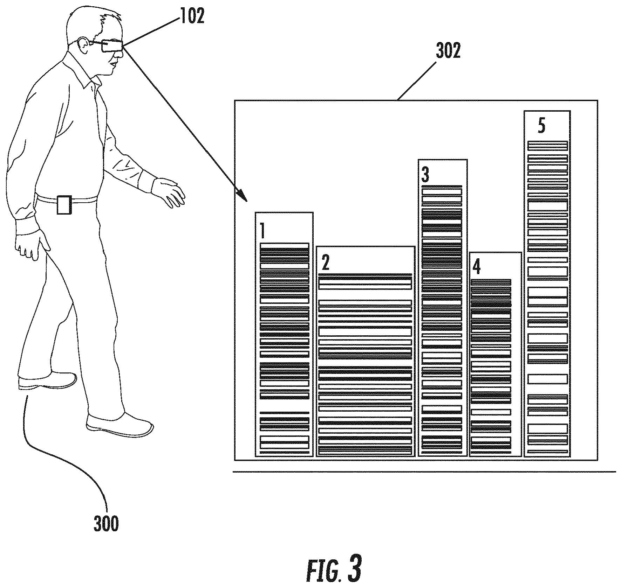

As discussed above, data about the device's 102 environment can be collected by sensors 138. For example, device 102 can collect depth data, perform spatial mapping of an environment, obtain image data such as visible indicia (e.g., barcodes), and/or perform various image analysis techniques. In one implementation, internal projector 148 of device 102 can be a non-visible light pattern projector. In this case, outward-facing camera(s) 108 and the non-visible light pattern projector 148 can accomplish spatial mapping, among other techniques. For example, the non-visible light pattern projector 148 can project a pattern or patterned image (e.g., structured light) that can aid the device 102 in differentiating objects generally in front of the operator wearing the device 102. The structured light can be projected in a non-visible portion of the radio frequency (RF) spectrum so that it is detectable by the outward-facing camera(s) 108, but not by the operator. For instance, as shown in Figure 3, if an operator 300 looks toward visible indicia such as barcodes 302, the projected pattern can make it easier for the device 102 to distinguish the visible indicia by analyzing the images captured by the outwardly facing cameras 108.

In some implementations, device 102 can include the ability to track eyes and head movements of an operator that is wearing device 102 (e.g., eye tracking). These features can be accomplished by sensors 138 such as the inwardly-facing cameras 110. For example, one or more inwardly-facing cameras 110 can point in at the user's eyes. Data (e.g., sensor data) that the inwardly-facing cameras 110 provide can collectively indicate a center of one or both eyes of the operator, a distance between the eyes, a position of device 102 in front of the eye(s), and/or a direction that the eyes are pointing, among other indications. In some implementations, the direction that the eyes are pointing can then be used to direct the outwardly-facing cameras 108, such that the outwardly-facing cameras 108 can collect data from the environment specifically in the direction that the operator is looking. In some implementations, device 102 can use information about the environment to generate binocular augmented reality images and display the images to the operator. Examples of wearable devices which can be modified to accomplish at least some of the present display concepts include a Lumus DK-32 1280x720 (Lumus Ltd.) and HoloLens™ (Microsoft Corporation) among others. While distinct sensors in the form of cameras 108 and 110 are illustrated in FIG. 1, sensors 138 may also be integrated into device 102, such as into lenses 112 and/or headband 118, as noted above.

As discussed above, binocular augmented reality device 102 can have a binocular augmented reality component (BARC) 142(1) in configuration 120 of Figure 1. In some implementations, the BARC 142(1) of device 102 can perform processing on the environment data (e.g., spatial mapping data, etc.). Briefly, processing can include performing spatial mapping, employing various image analysis techniques, calibrating elements of the binocular augmented reality device 102, and/or rendering computer-generated content (e.g., binocular images), among other types of processing. Examples of components/engines with capabilities to accomplish at least some of the present concepts include the KinectFusion® from Microsoft® Corporation which produces three-dimensional scanning. In some implementations, BARC 142(1) can include various modules. In the example shown in FIG. 1, as introduced above, the BARC is coupled with scene calibrating module (SCM) 144(1) and scene rendering module (SRM) 146(1). Briefly, the SCM can calibrate various elements of the binocular augmented reality device 102 such that information collected by the various elements and/or images displayed by the various elements is appropriately synchronized. The SRM 146 can render computer-generated content for binocular augmented reality experiences, such as rendering binocular images. For example, the SRM can render the computer-generated content such that images complement (e.g., augment) other computer-generated content and/or real world elements. The SRM 146(1) can also render the computer-generated content such that images are appropriately constructed for a viewpoint of a particular operator (e.g., view-dependent).

In yet another example, SCM 144(1) can measure distances between various elements of an environment. For instance, the SCM 144(1) can measure offsets between retroreflective tracking markers and lenses (or display) 112 of device 102 to find a location of the lenses. In some instances, the SCM 144(1) can use measured offsets to determine a pose of device 102. In some implementations, a device tracker mount can be tightly fitted to device 102 to improve calibration accuracy (not shown). In another example, SCM 144(1) can determine an interpupillary distance for an operator wearing device 102. The interpupillary distance can help improve stereo images (e.g., stereo views) produced by device 102. For example, the interpupillary distance can help fuse stereo images such that views of the stereo images correctly align with both projected computer-generated content and real world elements. In some cases, a pupillometer can be incorporated on device 102 (not shown) and used to measure the interpupillary distance. Any suitable calibration technique may be used without departing from the scope of this disclosure. Another way to think of calibration can include calibrating (e.g., coordinating) the content (e.g., subject matter, action, etc.) of images. In some implementations, SCM 144(1) can calibrate content to augment/complement other computer-generated content and/or real world elements. For example, the SCM 144(1) can use results from image analysis to analyze content for calibration. Image analysis can include optical character recognition (OCR), object recognition (or identification), face recognition, scene recognition, and/or GPS-to-location techniques, among others. Further, the SCM 144(1) can employ multiple instances of image analysis techniques. In some cases, the SCM 144(1) can combine environment data from different sources for processing. Scene rendering module (SRM) 146(1) can render computer-generated content for binocular augmented reality. The computer-generated content (e.g., images) rendered by the SRM 146(1) can be displayed by the various components of binocular augmented reality device 102.

In FIG. 2, device 102, server(s) 104, mobile device 106 and hub 108 can communicate with each other via various wired or wireless technologies generally represented by lightning bolts 107. Communication can be accomplished via instances of a communication component on the various devices, through various wired and/or wireless networks and combinations thereof. For example, the devices can be connected via the Internet as well as various private networks, LAN, Bluetooth, Wi-Fi, and/or portions thereof that connect any of the devices shown in FIG. 2. In some implementations, image processing on any of the server(s) 104 and/or mobile device 106 of FIG. 2 can be relatively robust and accomplish binocular augmented reality concepts relatively independently of device 102. In other implementations the BARC on any of the devices 102, 104 and 106 could send or receive binocular augmented reality information from other devices to accomplish binocular augmented reality concepts in a distributed arrangement. In another example, much of the processing could be accomplished by remote cloud based resources such as servers 104 or mobile device 106. An amount and type of processing (e.g., local versus distributed processing) of the binocular augmented reality system that occurs on any of the devices can depend on resources of a given implementation. For instance, processing resources, storage resources, power resources, and/or available bandwidth of the associated devices can be considered when determining how and where to process aspects of binocular augmented reality. Therefore, a variety of system configurations and components can be used to accomplish binocular augmented reality concepts. Binocular augmented reality systems can be relatively self-sufficient, as shown in the example in FIG. 1. Binocular augmented reality systems can also be relatively distributed, as shown in the example in FIG. 2. The device 102 display can include 3D images, can be spatially registered in a real world scene, can be capable of a relatively wide field of view (>100 degrees) for an operator, and can have view dependent graphics.

As discussed above the binocular augmented reality device 102 has the ability to render three-dimensional (3D) graphics in the operator's field of view so that visible indicia such as barcodes appear on the display screen. This is accomplished by rendering two different views of a scene to each of the operator's eyes. This induced parallax tricks the brain into thinking the rendered objects are in 3D. In addition to this volumetric display capability, the device 102 is also capable of spatially mapping its environment providing applications 122 with three-dimensional spatial information about objects in the field of view of the operator. The applications 122 will be notified by the sensors 138 and outward facing cameras 108 of all barcodes that are found and their position within the two-dimensional (2D) camera image. The applications 122 and processor 134 will actually decode the images, find the bounds of the barcodes during the decoding process, and store the bounds as pixel coordinates within the image. These coordinates are translated from image coordinates to display coordinates for display 112. The image(s) on display 112 are dependent on how the camera(s) 108 fields of view are physically aligning with the display field of view using both a translation and scaling function. These camera 108 coordinates would be converted into coordinates within the operator's field of view and the processor 134 would show a box around each barcode on display 112.

The inertial measurement unit (IMU) (e.g., nine axis IMU), combined with analyzing depth sensor data allows the device 102 to track the head movements, positioning and location of the operator and this feature is used commonly to infer a gaze of the operator by applications 122 in the device 102. In addition, or alternatively, the inward cameras 110 may be used to track the eye location and movements of the operator to determine upon which spot the operator is gazing. In a first embodiment, just the head position is tracked using the IMU and depth sensor analysis. In a second embodiment, the eye location and movement of the operator is monitored to determine the operator gaze location. In a third embodiment, both the head position is tracked using the IMU and depth sensor analysis as well as the eye location and movement of the operator. Whichever of the three embodiments are implemented, a gaze cursor is rendered in the operator's field of view on display 112 that visibly appears to lie on any surface that the operator is gazing upon. The gaze cursor will utilize the spatial mapping capabilities of the depth sensors to make the cursor always reside on the surface that the operator is currently gazing at. While the display coordinates are obtained and the bounding barcode box is rendered the cursor location is monitored by the applications 122. Once the location of the gaze cursor enters the display coordinates of the barcode's bounding box (for a predetermined period of time), that barcodes decode value is returned to the processor 134. This will be done by utilizing a ray tracing process and this will cause the cursor to appear directly (in 3D space) on each barcode the operator is currently gazing at.

When barcodes are found, the software will highlight at least one or all of the indicia such as barcodes visually within the operator's field of view (as shown in Figure 3). For example, a yellow boundary may appear around each of the barcodes. If multiple barcodes are found within the field of view (as shown in Figure 3), there may be rendered graphics on the display 112 that make it easier for the operator to select one of the plurality of the barcodes. To select the barcode that the operator is interested in "scanning" the operator will position the gaze cursor on the barcode by moving the operator's head and then perform an air click gesture with their finger(s) in front of the device 102 to select the barcode. The decoded barcode data would be returned to the processor 134 of the device 102 or forwarded to servers 104 and/or mobile device 106. The air click gesture by the operator is recognized by the depth sensor of the sensors 138 on the device 102 and is commonly used to simulate a mouse click on wherever the gaze cursor is currently located. In an alternative embodiment, instead of the air click gesture, a voice command by the operator could be received to click the gaze cursor (e.g., "select" or "scan"). In another alternative embodiment, it could be operator eye motion that controls the selection of a particular barcode. Specifically, the inward facing cameras 110 could receive a predetermined blink pattern from the operator to select one of a plurality of bar codes when the gaze cursor is on the appropriate bar code. Alternatively, the operator input could be a stare for a predetermined period of time (e.g., 500 to 2000 milliseconds) at the desired barcode.

When receiving an operator input such as an air click gesture, voice command, a blink command or staring for a predetermined time period is recognized and the gaze cursor is within the bounds of a barcode, a beep or other audible indicator could sound and/or other tactile notification could take place and the barcode data will be displayed on display 112, processed by the applications 122 with the processor 134 and/or returned to some host system.

The embodiments disclosed herein may utilize one or more applications 122 operated on by processor 134 which will process camera frames from the device 102 while attempting to locate and decode barcodes. The method may be implemented though a Microsoft Windows 10 Universal Windows Platform barcode scanning application(s) that integrates the Honeywell® SwiftDecoder® Mobile Software. SwiftDecoder is a barcode scanning software development kit (SDK) for smart device platforms. It will configure and use cameras 108 to acquire images, decode the images, and return the results to the calling application(s). This software plugin to SwiftDecoder Mobile will allow the operator to control the processor 134 and inputs of the device 102 for a scan event.

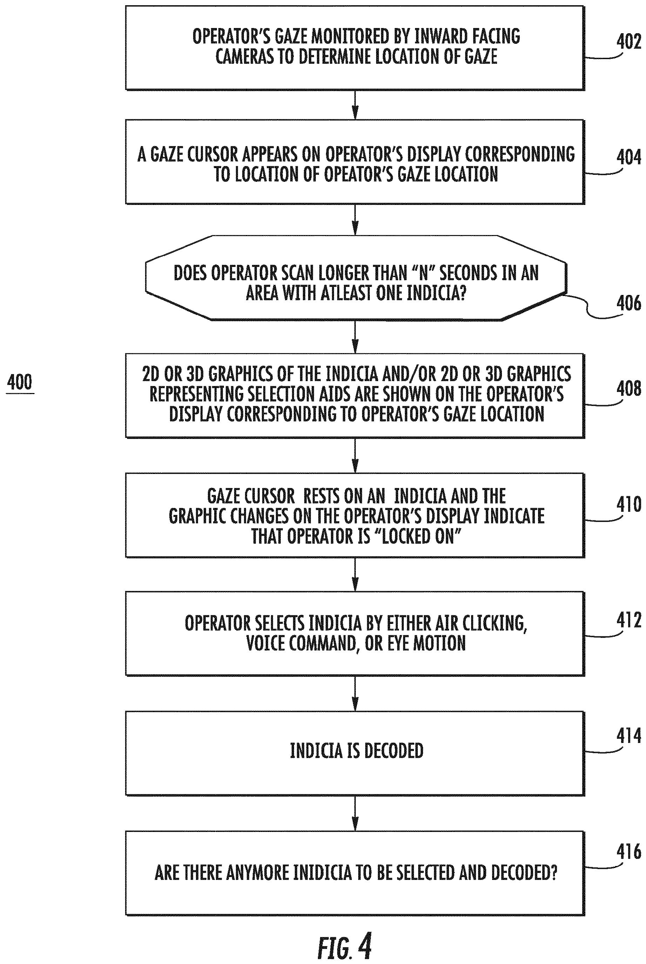

Figure 4 is a flowchart 400 demonstrating the process for selective scanning of visible indicia by the binocular augmented reality device 102. In step 402, the operator's gaze is monitored to see where the operator is looking. Information from the IMU combined with operator pupil tracking by the inward facing camera system 110 and depth sensor data allows the device 102 to track the gaze location of the operator. In step 404, a gaze cursor will appear on the operator's display corresponding to the location of the operator's gaze. In steps 406 and 408, if the operator gaze stays within any area which includes one or a plurality of indicia (e.g., barcode(s)) for a predetermined "n" seconds the indicia will appear in two dimensional (2D) or 3D graphics and be highlighted on the display 112. Selection aids in 2D or 3D may also appear on display 112 to assist in picking the correct indicia(s). The value of "n" will typically be greater than or equal to approximately a second but may be adjusted downward. As discussed above, the 3D graphics are accomplished by rendering two different views of a scene to each of the operator's eyes. This induced parallax tricks the brain into thinking the rendered objects are 3D. In addition to this volumetric display capability, the device 102 is also capable of spatially mapping its environment providing applications 122 with 3D spatial information about objects in the field of view of the operator.

In step 410, the gaze cursor in the operator's field of view visibly appears to lie on any visible highlighted indicia that the operator is gazing upon. In Figure 3, highlighted barcodes 302 are shown focused on by the operator 300. The graphics shown on displays 112 may change after a predetermined time period to indicate an operator's gaze is "locked on" to an indicia. In step 412, the operator selects which barcode is to be decoded through several methods.
First, by an air click gesture of the finger of the operator which is recognized by the depth sensors on the device 102 and is used to simulate a mouse click on whichever barcode the gaze cursor is currently located. Second, through a voice command the barcode that the gaze cursor is indicating is selected. Also, through operator eye motion through either a continued stare by the operator for a predetermined period of time (e.g., 500 to 2000 milliseconds) or a blink by the operator could indicate a selection of whichever barcode the gaze curser is hovering over. In step 414, the selected indicia is decoded and the information returned to processor 134 or shared with server(s) 104 and/or mobile device 106. In step 416, a decision is made whether there are more barcodes which have been located are also to be decoded and, if not, the applications 122 are finished and if there are more barcodes, the process is repeated from step 402.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Devices that are described as in "communication" with each other or "coupled" to each other need not be in continuous communication with each other or in direct physical contact, unless expressly specified otherwise. On the contrary, such devices need only transmit to each other as necessary or desirable, and may actually refrain from exchanging data most of the time. For example, a machine in communication with or coupled with another machine via the Internet may not transmit data to the other machine for long period of time (e.g. weeks at a time). In addition, devices that are in communication with or coupled with each other may communicate directly or indirectly through one or more intermediaries.

Although process (or method) steps may be described or claimed in a particular sequential order, such processes may be configured to work in different orders. In other words, any sequence or order of steps that may be explicitly described or claimed does not necessarily indicate a requirement that the steps be performed in that order unless specifically indicated. Further, some steps may be performed simultaneously despite being described or implied as occurring non-simultaneously (e.g., because one step is described after the other step) unless specifically indicated. Where a process is described in an embodiment the process may operate without any operator intervention.

## Claims

1. A method of selective indicia scanning on a binocular augmented reality headset comprising:
monitoring an operator's gaze to determine a location of where the operator's gaze is directed;
performing a scan of the operator's field of view to determine if at least one indicia is present;
positioning a cursor over the at least one indicia on a display;
selecting the at least one indicia; and
decoding the least one indicia to determine the information contained within.

2. The method of claim 1, further comprising:
monitoring the movement of the operator's head and the operator's gaze using a headband having a processor, inertial measurement unit, and inwardly facing cameras to calculate the position that the cursor should assume.

3. The method of claim 1, wherein the at least one indicia is selected upon receiving an air click by the operator.

4. The method of claim 1, wherein the at least one indicia is selected upon receiving a voice command from the operator.

5. The method of claim 1, wherein the at least one indicia is selected upon detecting a blink by the operator.

6. The method of claim 1, wherein the at least one indicia is selected upon detection that the operator has stared at the at least one indicia for a predetermined time period.

7. The method of claim 6, wherein the predetermined time period is approximately 500 to 2000 milliseconds.

8. The method of claim 1, wherein the indicia is a barcode.

9. A portable computer for imaging indicia comprising:
a processor coupled to at least one outward facing camera to capture at least one indicia within the operator's field of view; and
a display having a cursor corresponding to the eye gaze location of the operator;
wherein the processor is further configured to:
determine when the cursor is hovering over the at least one indicia; and
select the indicia and perform a decoding operation.

10. The computer of claim 9, further comprising:
an inertial measurement unit (IMU) coupled to the at least one outward facing camera to determine the posture and location of the operator's head to enable tracking of the eye gaze location of the operator.

11. The computer of claim 9, further comprising:
at least one inward facing camera tracking the location and movement of the operator's eyes to enable tracking of the eye gaze location of the operator.

12. The computer of claim 9, further comprising:
an inertial measurement unit (IMU) coupled to the at least one outward camera to determine the posture and location of the operator's head;
at least one inward facing camera tracking the location and movement of the operator's eyes; and
wherein the IMU and at least one inward facing camera enable tracking of the eye gaze location of the operator.

13. The computer of claim 12, further comprising:
a headband capable of being worn by an operator and wherein the processor, IMU, the at least one outward facing camera, and the at least one inward facing camera are attached to the headband.

14. The computer of claim 9, wherein the processor is capable of creating selection aids near the at least one indicia.

15. The computer of claim 9, wherein the at least one indicia is selected upon receiving an air click by the operator.
